# EUROPEAN PATENT APPLICATION

(11) **EP 3 364 022 A1**
(43) Date of publication of application: **22.08.2018**
(21) Application number: 18152388.7
(22) Date of filing: 18.01.2018
(51) Int. Cl.: F03D 7/04, F03D 7/02

(54) **CONTROLLER FOR PLURAL WIND POWER GENERATORS, WIND FARM, OR CONTROL METHOD FOR PLURAL WIND POWER GENERATORS**

(30) Priority: 21.02.2017 JP 2017029565
(71) Applicant: Hitachi, Ltd., Chiyoda-ku Tokyo 100-8280 (JP)
(72) Inventor: KONDO, Shinichi, Tokyo, 100-8280 (JP); KAKUYA, Hiromu, Tokyo, 100-8280 (JP); SAKAMOTO, Kiyoshi, Tokyo, 100-8280 (JP); SAEKI, Mitsuru, Tokyo, 100-8280 (JP)
(74) Representative: MERH-IP Matias Erny Reichl Hoffmann Patentanwälte PartG mbB

(57) **Abstract**

A controller for plural wind power generators (10) improves power generation output in a wind farm (100) and reduces damage to a blade or the like of the wind power generator. The controller has a calculation unit that calculates a rotational speed command value, a torque command value, or a yaw angle command value for the plurality of wind power generators 10a and 10b, using measured wind condition information, so as to obtain total generated power generated with the plurality of wind power generators 10a and 10b, higher than total generated power obtained by control to obtain maximum generated power generated with a wind power generator 10a on the windward side, and so as to make any damage to the wind power generator on the windward or leeward side or total damage to the wind power generator 10a or 10b on the windward or leeward side, lower than damage or total damage received by the control to obtain the maximum generated power generated with the wind power generator 10a on the windward side. The controller controls the respective wind power generators (10) based on a result of the calculation.

## Description

### BACKGROUND

The present invention relates to a controller for plural wind power generators, a wind farm, or a control method for plural wind power generators.

There have been concerns over depletion of fossil fuels such as petroleum for a long time. Further, for countermeasures against global environmental warming, reduction of carbon dioxide discharge is an urgent issue that should be addressed by the entire world. To address these problems, as power generation without fossil fuel or CO₂ discharge, introduction of power generation using natural energy such as solar power generation and wind power generation is advanced rapidly in the world.

In accordance with this trend, a wind power generator group (wind farm) having two or more wind power generators is increased. As introduction of wind power generators is advanced and the generators are required to play a role of important power source, improvement of power generation output in the entire wind farm is desired. However, in installation of the wind farm, as the site area and the like are limited, it is not possible to install the wind power generators with a sufficient distance between them. In many cases, the distance between the wind power generators is short to a certain degree. When the wind power generators are away from each other with a sufficient distance between them, it is not necessary to consider the influence of a slipstream passed through a windward wind power generator. However, when the distance between the wind power generators is short to a certain degree, the leeward wind power generator is influenced with the slipstream passed through the windward wind power generator. Thus the power generation output from the leeward wind power generator is reduced.

Japanese Unexamined Patent Application Publication (Translation of PCT Application) No. 2010-526963 proposes a method of setting an operation parameter of a wind power generator, based on wind speed ratio between plural wind power generators, so as to obtain maximum power generation output.

In the slipstream passed through the wind power generator, the wind speed is lower than that before passage, and it includes a turbulence component influenced with a turning blade of the wind power generator. The slipstream may lower the power generation output from the leeward wind power generator and damage the blade or the like of the leeward wind power generator.

Regarding the above-described decrease of power generation output from the leeward wind power generator, the prior art literature proposes the method of setting the operation parameter of the wind power generator based on the wind speed ratio between plural wind power generators so as to obtain maximum power generation output. However, in the method in the prior art literature, there is a possibility that when the setting to obtain maximum power generation output is made, the turbulence to damage the blade or the like of the leeward wind power generator is increased and the damage is accelerated. Further, in accordance with setting of the operation parameter in the windward wind power generator, there are concerns over increase in the damage to the windward wind power generator by frequent pitch angle control or the like.

### SUMMARY

In view of the above situation, the present invention provides a controller or a control method for reducing damage to a blade or the like of a wind power generator while rising power generation output in a wind farm, or a wind farm.

According to one aspect of the present invention, to solve the above problems, the present invention provides a controller for controlling a plurality of wind power generators, including: a calculation unit that calculates a rotational speed command value, a torque command value, or a yaw angle command value for the plurality of wind power generators, using measured wind condition information, so as to obtain total generated power generated with the plurality of wind power generators, higher than total generated power obtained by control to obtain maximum generated power generated with a wind power generator on the windward side, and so as to make any damage to the wind power generator on the windward or leeward side or total damage to the wind power generator on the windward or leeward side, lower than damage or total damage received by the control to obtain the maximum generated power generated with the wind power generator on the windward side. The controller controls the respective wind power generators based on a result of the calculation.

Further, a wind farm according to the present invention has the controller and a plurality of wind power generators controlled with the controller.

Further, the present invention provides a control method for a plurality of wind power generators, including: measuring wind condition information; calculating a rotational speed command value, a torque command value, or a yaw angle command value for the plurality of wind power generators, using measured wind condition information, so as to obtain total generated power generated with the plurality of wind power generators, higher than total generated power obtained by control to obtain maximum generated power generated with a wind power generator on the windward side, and so as to make any damage to the wind power generator on the windward or leeward side or total damage to the wind power generator on the windward or leeward side, lower than damage or total damage received by the control to obtain maximum generated power generated with the wind power generator on the windward side; and controlling the plurality of wind power generators based on a result of the calculation.

According to the present invention, it is possible to reduce damage to a blade or the like of a wind power generator while rise power generation output in a wind farm.

### BRIEF DESCRIPTION OF THE DRAWINGS

FIG. 1 is a schematic diagram showing occurrence of error in a wind direction measurement value in a leeward wind power generator, caused with turbulence included in a slipstream passed through a windward wind power generator, according to a first embodiment of the present invention;
FIG. 2 is a schematic diagram of a configuration of a wind farm according to the first embodiment;
FIG. 3 is a block diagram showing functions of an information collector/general controller according to the first embodiment;
FIG. 4 is a graph showing an example of an operation to control the wind power generator in accordance with a rotational speed command, according to the first embodiment;
FIG. 5 is a graph showing an example of an operation to control the wind power generator in accordance with a torque command, according to a second embodiment of the present invention;
FIG. 6 is a graph showing an example of an operation to control the wind power generator in accordance with a yaw angle command, according to a third embodiment of the present invention;
FIG. 7 is a flowchart showing determination of application of a control method according to a fourth embodiment of the present invention;
FIG. 8 is a schematic diagram of a configuration of the wind farm according to a fifth embodiment of the present invention;
FIG. 9 is an example of a screen displaying generated power and degree of damage in respective wind power generators, according to a sixth embodiment of the present invention;
FIG. 10 is a graph showing an example of relationship among control method, total generated power, and total degree of damage, in the wind power generator according to a seventh embodiment of the present invention; and
FIG. 11 is a schematic diagram of a configuration of the wind farm according to an eighth embodiment of the present invention.

### DETAILED DESCRIPTION

Hereinbelow, preferred embodiments for implementation of the present invention will be described using the drawings. Note that the following description merely shows embodiments, without any intention to limit the object of application of the present invention to the following particular aspects.

### First Embodiment

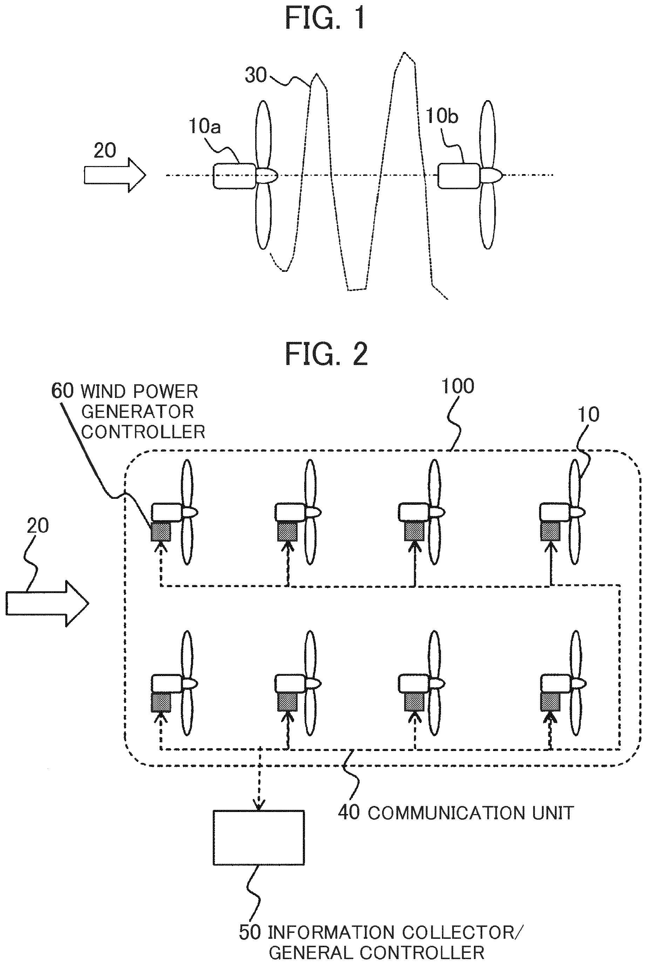

FIG. 1 illustrates an image showing decrease in power generation output in a leeward wind power generator 10b due to turbulence included in a slipstream 30 passed through a wind power generator 10a, and damage to a blade or the like, in the present embodiment. In the respective wind power generators, a rotor receives a wind and rotates, and a nacelle which rotatably supports the rotor follows the change of wind direction. The nacelle is rotatably supported with respect to a tower. As shown in the figure, when a wind flowed in the wind power generator 10a installed on the windward side passes through the wind power generator 10a and becomes a slipstream, the wind speed upon inflow attenuates. Further, it includes a turbulence component in accordance with structure of the wind power generator 10a or rotation of the blade. The wind power generator 10b installed on the leeward side receives the slipstream that passed through the wind power generator 10a. In comparison with the case where the wind directly flows in the leeward wind power generator 10b without passing through the windward wind power generator 10a, the generated power is decreased, and the degree of damage to the blade or the like is raised due to the above-described turbulence component.

FIG. 2 is a schematic diagram of a configuration of a wind farm 100 according to the present embodiment. The respective wind power generators 10 are provided with a wind power generator controller 60 to issue a rotational speed command, a torque command or a yaw angle command. The wind power generator controllers 60 are mutually connected with a communication unit 40. An information collector/general controller 50 is connected to the wind power generator controllers 60 by communication. The information collector/general controller 50 collects measurement information such as a rotational speed command value, a torque command value, a yaw angle command value, a wind speed measurement value, a wind direction measurement value, generated power, degree of damage and the like, from the respective wind power generators 10. Further, the information collector/general controller 50 transmits a control method or the like using the rotational speed command, the torque command, and the yaw angle command, to the respective wind power generator controllers 60.

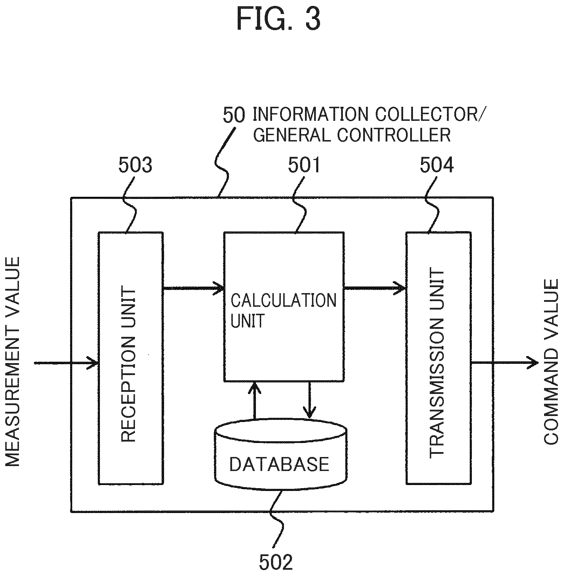

FIG. 3 is a block diagram showing a configuration of the collector/general controller 50 according to the present embodiment. A reception unit 503 receives the measurement information such as the wind speed, the wind direction measurement value, the generated power, and the degree of damage, in the respective wind power generators 10, sent from the wind power generator controllers 60 via the communication unit 40. A calculation unit 501 reads, in addition to the measurement information, characteristic information of the wind power generator 10, information on installation positon of the wind power generator 10 and topographic information, power generation amount, simulation result of degree of damage, and the like, from a database 502. The calculation unit 501 calculates any or all of the rotational speed command value, the torque command value, and the yaw angle command value, for the wind power generator 10, based on the read information. The calculation unit 501 stores the calculation result in the database 502, and transmits the calculated command values from a transmission unit 504 to the respective wind power generators 10. As the respective command values, e.g., a rotational speed upper limit value, a torque upper limit value, and a yaw angle range value, are calculated.

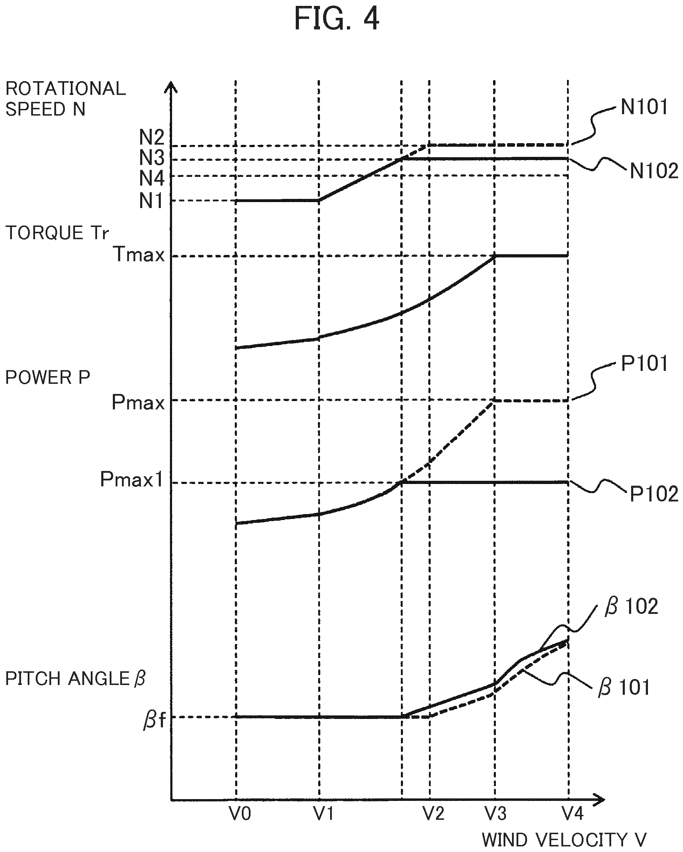

FIG. 4 is a graph showing an example of an operation in a control method for the wind power generator 10a, using the rotational speed command, according to the present embodiment. In the figure, a horizontal axis indicates a wind speed V of wind which flows in the wind power generator 10a, and a vertical axis indicates a rotational speed N, torque Tr, generated power P, and a pitch angle β in the wind power generator 10a, respectively. In the conventional control, as respectively indicated with a dotted line denoted by numeral 101, except the torque, when the wind speed V becomes equal to or higher than a cut-in wind speed V0, then rotation is started at a rotational speed N1, to start power generation in the wind power generator 10a. When the wind speed is equal to or higher than V1, variable speed driving is started. When the wind speed is equal to or higher than V2, then the driving is constant at a rotational speed N2. When the wind speed is equal to or higher than V3, rated output is performed. When the wind speed becomes V4, to protect the device from strong wind, the power generation is stopped (cut out). When the wind speed is V2 to V4, to maintain a predetermined rotational speed and a predetermined amount of power generation, the pitch angle β is changed to a pitch angle on the feather side from a fine pitch angle βf to obtain maximum generated power. That is, the characteristics of the rotational speed, the generated power, and the pitch angle respectively draw curves as denoted by N101, P101, and β101.

In FIG. 4, in the wind power generator control method according to the present embodiment, the rotational speed upper limit value is set between a value N3 lower than N2, and a further low value N4 (N102) . N3 indicates a rotational speed to obtain maximum total generated power generated with the windward power generator 10a and the leeward wind power generator 10b. N4 indicates a rotational speed to obtain total generated power generated with the wind power generators 10a and 10b, higher than that in the conventional control, to reduce damage to the windward wind power generator 10a. With this control, the maximum value of the generated power is Pmax1 lower than Pmax. That is, the characteristics of the rotational speed and the generated power draw curves as denoted by N102 and P102. Further, the pitch angle β starts operation from the wind speed when the rotational speed is N3, to draw a curve as denoted by β102. With this operation, the attenuation of the velocity of the wind passing through the wind power generator 10a is reduced, and the rotational speed of the blade is lowered, to reduce the turbulence component. As the attenuation of the wind speed of the wind passing through the wind power generator 10a is reduced, the wind speed of the wind which flows in the leeward wind power generator 10b is increased, and the generated power generated with the leeward wind power generator 10b is increased. Further, as the turbulence component included in the wind speed of the wind passing through the wind power generator 10a is reduced, the degree of damage to the blade or the like due to the turbulence component is lowered. Since the generated power generated with the wind power generator is proportional to the third power of the wind speed of the flow-in wind, the increment of the generated power in the wind power generator 10b by increase in the wind speed of the wind which flows in the leeward wind power generator 10b is compared, rather than the generated power reduced in the windward wind power generator 10a, and N3 and N4 to increase power in the latter are obtained by previous simulation or the like. With this configuration, it is possible to further increase the total generated power generated with the wind power generator 10a and the wind power generator 10b in comparison with that in the conventional art.

### Second Embodiment

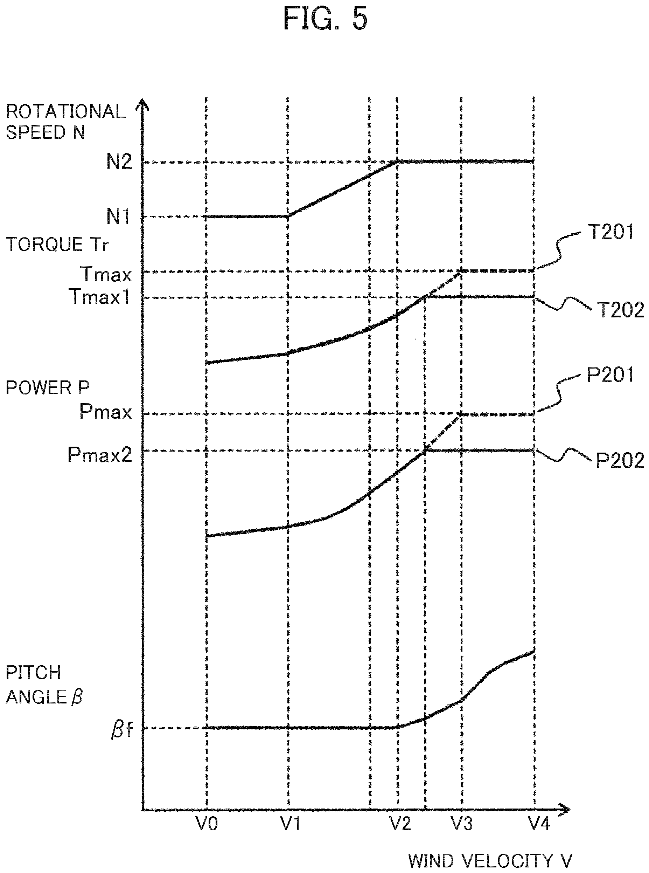

FIG. 5 is a graph showing an example of an operation using the torque command, among control methods for the wind power generator 10a, according to a second embodiment of the present invention. In the figure, when the present embodiment is applied, the torque upper limit value is set to Tmax1 lower than a general upper limit value Tmax. With this setting, the maximum value of generated power is Pmax2 lower than Pmax. That is, the characteristics of the torque and the generated power draw curves as denoted by T202 and P202. With this operation, it is possible to obtain a turbulence component and an increment of generated power generated with the leeward wind power generator 10b, different from those obtained in the rotational speed setting in the first embodiment. Regarding the turbulence component, the degree of increment/decrement is obtained in comparison with a case where the rotational speed is set by simulation or actual measurement, and the control in the first or second embodiment is selected in accordance with the result.

### Third Embodiment

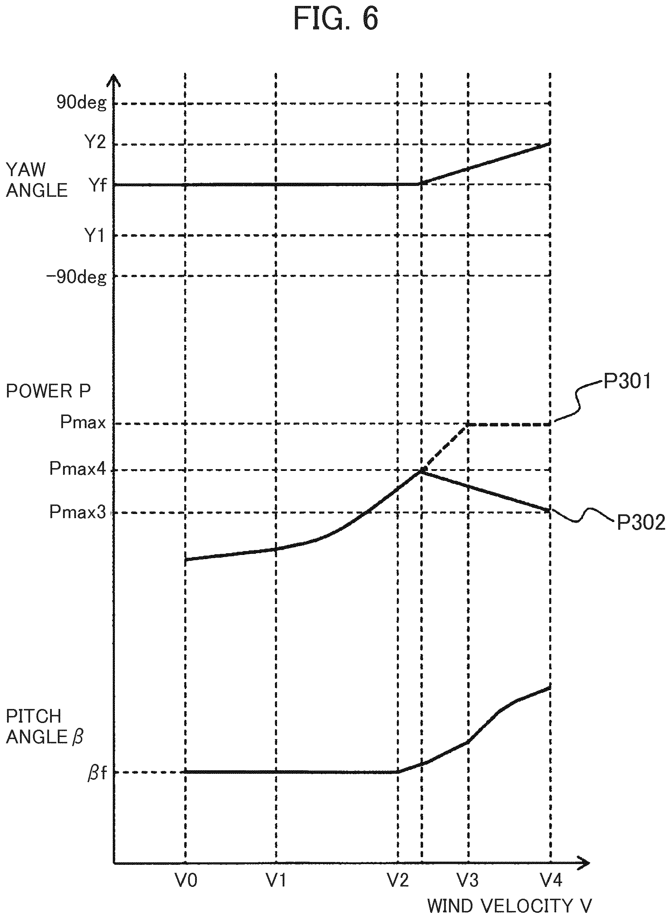

FIG. 6 is a graph showing an example of an operation using the yaw angle command, among the control methods for the wind power generator 10a, according to a third embodiment of the present invention. In the figure, when the present embodiment is applied, the yaw angle command value is set within the range of Y1 and Y2 different from a general value Yf. Within the range, a yaw angle command value to obtain an output reduction amount from the windward wind turbine is set such that a total amount of power generation with the windward and leeward wind turbines is increased in comparison with that before the control. Note that Yf indicates an angle parallel to a wind direction. With this setting, the maximum value of generated power is between Pmax3 lower than Pmax and Pmax4. That is, the characteristic of the generated power draws a curve as denoted by P302. With this operation, it is possible to obtain a turbulence component and an increment of generated power generated with the leeward wind power generator 10b, which are different from those obtained in the rotational speed setting in the first and second embodiments. Regarding the turbulence component, the degree of increment/decrement is obtained in comparison with the case where the rotational speed is set by simulation or actual measurement, and the control in the first, second, or third embodiment is selected in accordance with the result. Note that the setting on the Y1 side or the Y2 side, and the degree of the range are determined based on arrangement of other wind power generators than the wind power generator 10a and the wind power generator 10b, and the distance to the leeward wind power generator 10b. For example, when there is no other leeward wind power generator on the Y1 side but other leeward wind power generator (s) on the Y2 side, the setting on the Y2 side flows a slipstream in the direction of the yaw angle. In this case, improvement of the generated power generated with other wind power generator(s) is expected. This advantage is obtained since the direction of the slipstream is changed by adjusting the yaw angle of the windward wind power generator.

In the first to third embodiments, the rotational speed, the torque upper limit value, or the yaw angle control range of the wind power generator are independently controlled. Further, it may be configured such that two or more values are combined to command the respective wind power generators . It is possible by using a combination of values to further improve the power generation amount and damage reduction in comparison with application of single value.

### Fourth Embodiment

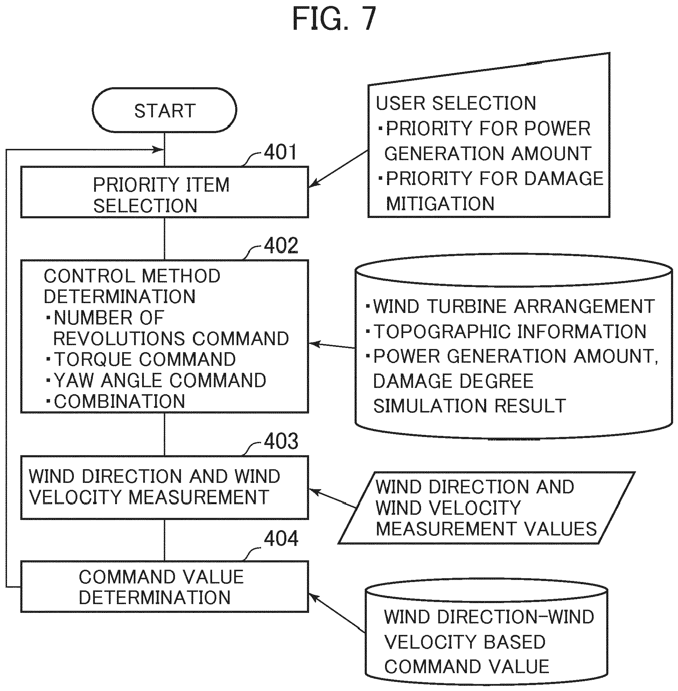

FIG. 7 is a flowchart showing an example of determination of operation of control contents in the first to third embodiments, according to a fourth embodiment of the present invention. In priority item selection (401), a user who operates the wind farm selects priority for increment of power generation amount or priority for reduction of degree of damage. Using a result of the selection, and arrangement of the wind power generators and topographic information, previously stored in and read from the DB, it is determined which of the control methods using the number of revolutions command in the first embodiment, the torque command in the second embodiment, and the yaw angle command in the third embodiment, is advantageous with respect to the increment of the power generation amount or the reduction of degree of damage, selected in the priority item selection (401), based on previous simulation result or the like. Then one of the control methods to be applied is determined (402). Thereafter, the wind direction and wind speed measurement values are read (403). Then any or combination of the number of revolutions command, the torque command, the yaw angle command for the windward wind power generator, is determined (404) from the wind-direction and wind speed based command values, obtained by previous simulation, experiment and the like and stored in the database.

### Fifth Embodiment

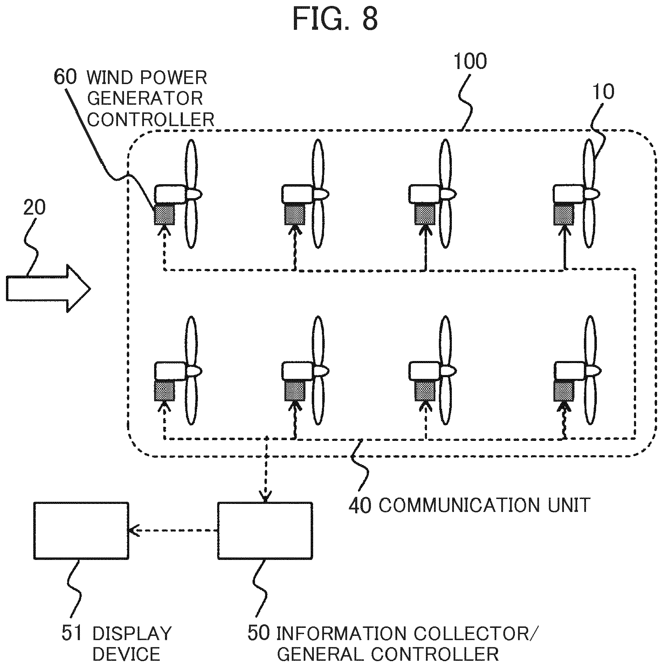

FIG. 8 shows an example of the configuration of the wind farm 100 according to a fifth embodiment of the present invention. The respective wind power generators 10 are provided with the wind power generator controller 60 to issue the rotational speed command, the torque command, or the yaw angle command. The wind power generator controllers 60 are mutually connected with the communication unit 40. The information collector/general controller 50 is connected to the wind power generator controllers 60 by communication. The information collector/general controller 50 collects measurement information such as the rotational speed command value, the torque command value, the yaw angle command, the wind speed and wind direction measurement values, the generated power, and the degree of damage in the respective wind power generators 10. Further, the information collector/general controller 50 transmits a control method or the like using the rotational speed command, the torque command, and the yaw angle command, to the respective power generator controllers 60. A display device 51 has a function of displaying some or all the information collected with the information collector/general controller 50.

### Sixth Embodiment

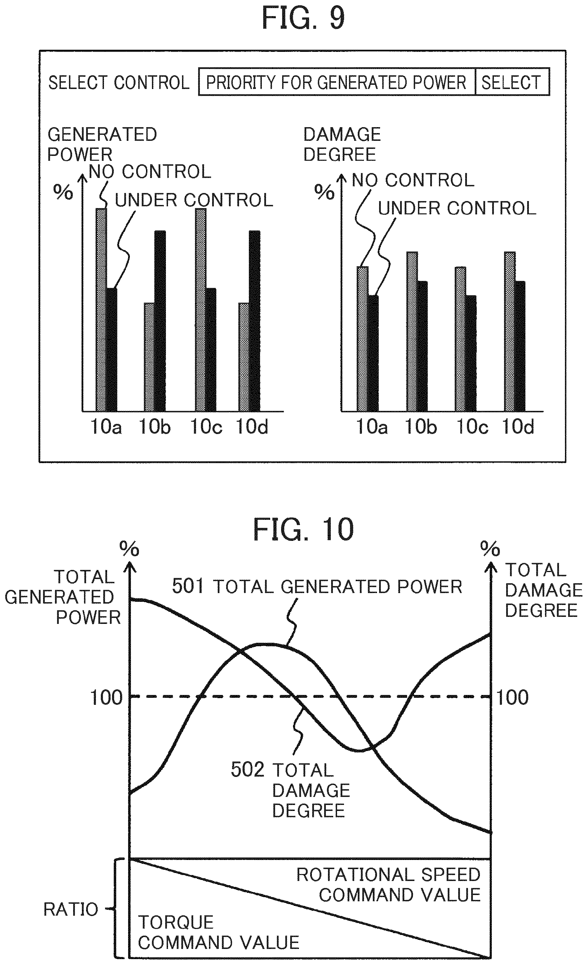

FIG. 9 is an example of a screen on the display device 51 showing the increment of generated power and the degree of damage in the respective wind power generators according to a sixth embodiment of the present invention. The wind power generator controller 60 outputs total value or increment of the generated power generated with the corresponding wind power generator, or the reduction amount of the degree of damage in the wind power generator, to the display device 51. The screen of the display device 51 shows a graph indicating the generated power and the degree of damage in the respective wind power generators in use of the control of the present invention and those without the control, compared with each other. The user looks at the display and selects the priority for the generated power or the priority for the reduction of degree of damage.

### Seventh Embodiment

FIG. 10 is a graph showing the characteristics of total generated power 501 and total degree of damage 502 in the wind farm when the ratio between the rotational speed command value and the torque command value is changed, according to a seventh embodiment of the present invention. These characteristics are previously stored in the database. In the figure, a dotted line indicates the case where the control in the respective embodiments is not performed, i.e., control is performed so as to obtain a maximum value of generated power in the wind power generator on the windward side. The graph shows, assuming that the value in this case is 100% as a reference, how the total generated power 501 and the total degree of damage 502 change with respect to the reference while the ratio is changed. It is possible, by selecting an appropriate ratio, to select a region where the total generated power 501 is over 100% while the total degree of damage 502 is lower than 100%. Note that the ratio at which the total degree of damage 502 is the lowest and the ratio at which the total generated power 501 is the maximum do not correspond with each other. By previously obtaining the characteristics of the rotational speed command value and the torque command value as described above, from the conditions such as the arrangement of the wind power generation system in the wind farm and the topography, it is possible to determine a particular control method regarding selection of priority for generated power or priority for reduction of degree of damage, as shown in the fifth embodiment. Note that in the present embodiment, although the ratio between the rotational speed command value and the torque command value is changed, this does not pose any limitation on the invention. It may be possible to change and apply any value(s) or the ratio of any combination of the rotational speed command value, the torque command value, and the yaw angle command value.

### Eighth Embodiment

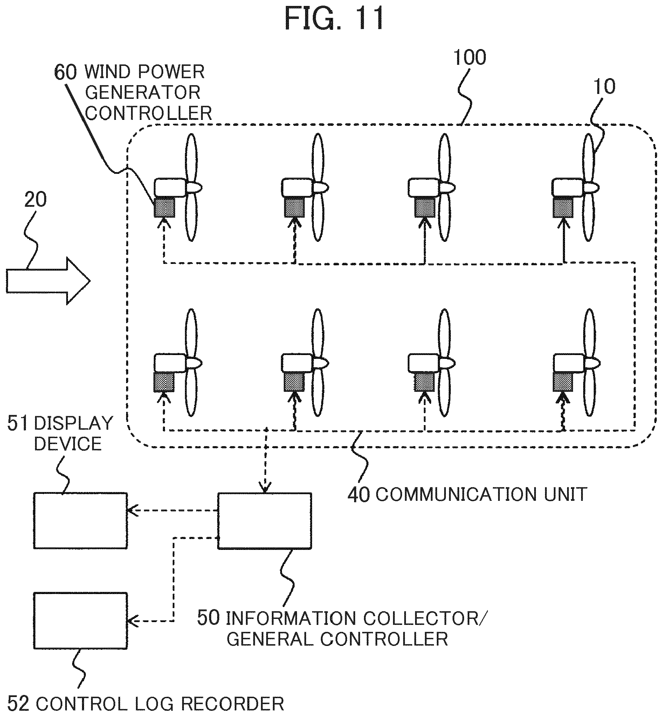

FIG. 11 shows another example of the configuration of the wind farm 100 according to an eighth embodiment of the present invention. In the figure, the difference from FIG. 6 is that the wind farm 100 has a control log recorder 52 to record some or all the information collected with the information collector/general controller 50. The control log recorder 52 has a function of recording the command values transmitted from the information collector/general controller 50 to the respective wind power generators 10, how the attenuation amount of the wind speed and the turbulence component change in accordance with the command values, the increment of the generated power, the change of the degree of damage to the wind power generator.

### Ninth Embodiment

In the fifth or eighth embodiment, when the communication unit 40 connecting the wind power generator controllers 60 with the information collector/general controller 50 is disconnected due to a breakdown or the like, the wind power generator controller 60 continues the control method immediately before the disconnection of the communication unit 40. Otherwise, the wind power generator controller 60 changes the control method to a previously set control method. At this time, the wind power generator controller 60 issues the respective command values of the rotational speed, the torque, and the yaw angle, based on the wind speed and the wind direction measured with the own-end wind power generator 10, to the wind power generator 10, in accordance with the control method. The wind power generator controller 60 stores the information such as the measured values and transmitted command values in the device until the communication unit 40 is recovered. After the recovery of the communication unit 40, the wind power generator controller 60 transmits the stored information to the information collector/general controller 50.

## Claims

1. A controller for controlling a plurality of wind power generators (10), comprising: a calculation unit that calculates a rotational speed command value, a torque command value, or a yaw angle command value for the plurality of wind power generators (10), using measured wind condition information, so as to obtain total generated power generated with the plurality of wind power generators (10), higher than total generated power obtained by control to obtain maximum generated power generated with a wind power generator on the windward side, and so as to make any damage to the wind power generator on the windward or leeward side or total damage to the wind power generator on the windward or leeward side, lower than damage or total damage received by the control to obtain the maximum generated power generated with the wind power generator on the windward side,
wherein the controller controls the respective wind power generators (10) based on a result of the calculation.

2. The controller according to claim 1, wherein the rotational speed command value, the torque command value, and the yaw angle control command value for the plurality of wind power generators (10) are calculated, and among the respective command values, two or more values are combined, so as to command the plurality of wind power generators (10) .

3. The controller according to claim 1 or 2, wherein when the control is performed based on the yaw angle, the yaw angle is calculated so as to flow a slipstream to a wind power generator on the leeward side of a control target wind power generator.

4. The controller according to any one of claims 1 to 3, further comprising:
a selection unit that selects priority for improvement of total generated power generated with the plurality of wind power generators (10), priority for reduction of damage to the wind power generator on the windward or leeward side, or priority for reduction of total degree of damage to the plurality of wind power generators (10); and
a database (502) that holds at least one of arrangement information of the plurality of wind power generators (10) and topographic information on a site where the plurality of wind power generators (10) are installed,
wherein calculation is performed by using at least one of the result of selection with the selection unit, the arrangement information, and the topographic information.

5. The controller according to claim 4, further comprising: a database (502) that holds a combination of the improvement of total generated power generated with the plurality of wind power generators (10), and the reduction of damage to the wind power generator on the windward or leeward side, based on the result of selection with the selection unit,
wherein the rotational speed command value, the torque command value, or the yaw angle command value is determined using the stored information.

6. The controller according to any one of claims 1 to 5, wherein the total generated power generated with the plurality of wind power generators (10), an increment of the total generated power, or a reduction amount of the degree of damage is outputted to a display device (51) .

7. The controller according to any one of claims 1 to 6, having a function of recording information such as the increment of the generated power generated with the plurality of wind power generators (10), the reduction amount of the degree of damage, the wind speed, and the wind direction.

8. A wind farm (100) comprising the controller according to any one of claims 1 to 7 and a plurality of wind power generators (10) controlled with the controller.

9. A control method for a plurality of wind power generators (10), comprising:
measuring wind condition information;
calculating a rotational speed command value, a torque command value, or a yaw angle command value for the plurality of wind power generators (10), using measured wind condition information, so as to obtain total generated power generated with the plurality of wind power generators (10), higher than total generated power obtained by control to obtain maximum generated power generated with a wind power generator on the windward side, and so as to make any damage to the wind power generator on the windward or leeward side or total damage to the wind power generator on the wind ward or leeward side, lower than damage or total damage received by the control to obtain maximum generated power generated with the wind power generator on the windward side; and
controlling the plurality of wind power generators (10) based on a result of the calculation.
